# EUROPEAN PATENT SPECIFICATION

(11) **EP 4 162 911 B1**
(45) Date of publication and mention of the grant of the patent: **20.08.2025**
(21) Application number: 22200941.7
(22) Date of filing: 11.10.2022
(51) Int. Cl.: A61G 5/04, A61G 5/10

(54) **A PERSONAL MOVABLE CHAIR, AND A METHOD FOR CONTROLLING SAID CHAIR**
PERSÖNLICHER BEWEGLICHER STUHL UND VERFAHREN ZUR STEUERUNG DES STUHLS
CHAISE MOBILE PERSONNELLE ET PROCÉDÉ DE COMMANDE DE LADITE CHAISE

(30) Priority: 11.10.2021 SE 2130273
(43) Date of publication of application: 12.04.2023
(73) Proprietor: Mercado Medic AB, 181 57 Lidingö (SE)
(72) Inventor: BONNEVIER, Martin, Bålsta (SE); LARM, Alina, Enköping (SE); MALMSTEN, Alf, Sundbyberg (SE); FARMÄNGEN, Hampus, Nacka (SE)
(74) Representative: Westpatent AB

(56) References cited:
- EP-B1- 0 770 371
- US-A- 3 938 608
- US-A- 5 222 567
- US-A- 5 236 055

## Description

### TECHNICAL FIELD

The disclosure relates to a personal movable chair configured to be operated on a surface by manual force from a user, said chair comprising a frame with a seat for said user and a plurality of non-driven wheels.

The disclosure also relates to a method for operating a personal movable chair along a surface by manual force from a user of said chair, wherein said chair comprises a frame with a seat for said user and a plurality of non-driven wheels.

### BACKGROUND

Today, there is a high demand for aids for people with disabilities, such as for example wheelchairs, in particular in order to assist persons who have difficulty in walking. The general purpose of such equipment is of course to provide a high quality of life for disabled, injured or older persons by simplifying their need for transports without having to walk on foot.

A conventional wheelchair normally comprises a frame, a seat for the user and four non-driven wheels, more precisely in the form of two relatively small front wheels and two relatively large rear wheels arranged on a fixed axle. Such a wheelchair is normally provided with rear handles so that a caretaker may push the wheelchair forward with the user sitting in it. Also, as is well known, a wheelchair is normally provided with footrests for the user and normally also a brake mechanism to lock the rear wheels when the wheelchair is parked.

A self-powered wheelchair can also be designed in a manner so that the user may push on the rear wheels by manual force, or may alternatively be provided with separate circular rims being attached to the rear wheels, so that the user may force the wheelchair in a suitable direction.

According to known technology, a wheelchair may also be configured with means for electrically powered operation. For example, there exist solutions involving wheelchairs having electrically operated wheels. Such wheelchairs can be maneuvered by means of a joystick or remote control by means of which the user may control the electrically operated wheels in the wheelchair. In this manner, the user who is seated in the wheelchair may easily control and steer the wheelchair on sidewalks, in shopping malls and other similar environments, and obviously also in an indoors home environment.

A further type of transport means is the so-called power-operated scooter, which is intended for persons who are not necessarily disabled or unable to walk, but for persons who may have a limited ability to walk and may need to move around more easily in shopping malls, airports and similar environments.

As an alternative to electrically operated wheelchairs, a further type of chair may be configured for foot propulsion, i.e. allowing a user to use the strength and force in their legs and feet in order to propel the chair in a desired direction along a surface, for example in a home environment. Such chairs may have a lower seat height and retractable footrests in order to optimize the chair to such type of propulsion. Such chairs are normally intended to be used by persons having a certain degree of mobility of the legs and feet. Furthermore, a chair of this type is significant in order to improve the health and quality of life for disabled persons in a manner in which their own abilities and muscle force are used. Otherwise, such persons may instead require a need for more advanced aids and medical care, which may have impact on the quality of life and which also is negative for society in general.

A particular feature of such a chair is that it may allow to be moved along a surface in generally any direction since they are provided with a number of relatively small castor wheels. This is not the case with a conventional wheelchair.

A disadvantage with a chair of the above-mentioned type is that it may be difficult to control in a situation in which the user approaches an obstacle such as a threshold, an edge of a thick carpet or a similar object. In such situations, the user's own manual force may not be sufficient in order to move the chair as desired in a certain direction across such an obstacle.

In summary, a person finding it difficult to walk or stand up may use a chair which is provided with wheels in order to move the chair. However, there is a desire to provide even more user-friendly and versatile solutions which are easy to use in a reliable manner for older or disabled persons who are unable to walk.

US3938608A and US5236055A disclose movable chairs with a driven wheel.

Consequently, there is a need for further improvements within the technical field of personal movable chairs.

### SUMMARY

The invention is set out in the appended set of claims.

In accordance with this disclosure, there is provided an improved personal movable chair having a purpose of solving one or more of the drawbacks of known devices within this field.

In accordance with the disclosure, there is provided a personal movable chair configured to be operated along a surface by manual force from a user of said chair. Said chair comprises a frame with a seat for said user and a plurality of non-driven wheels. Furthermore, the chair comprises a driven wheel and a support arrangement for said driven wheel, said support arangement comprising an actuator which is configured for lifting and lowering, upon actuation, said driven wheel in relation to said surface, between a first position in which it is in contact with said surface and a second position in which it is raised from said surface.

Certain advantages can be achieved by means of the chair according to the disclosure. In particular, the chair can be operated in a reliable manner by a user when it has to be moved over obstacles such as for example thresholds and thick carpets in an indoors environment. Generally, the chair may be used so as to move in any horizontal direction in order to simplify for example household work for the user of the chair. The chair according to the disclosure will contribute to a high quality of life for persons who have difficulty in walking, both as regards the need for transports and also for improving the mobility within their own homes.

According to an embodiment, the driven wheel is positioned generally centrally under said seat.

Furthermore, according to an embodiment, the support arrangement is mounted on a support post which extends downwardly from the underside of said seat.

According to an embodiment, the support arrangement supports an actuator which is configured for raising and lowering said driven wheel between said first and second positions, respectively.

Furthermore, according to an embodiment, the support arrangement comprises a pivotable wheel fixation element which is configured so as to be pivoted, upon actuation, so as to displace the driven wheel between said first and second positions, respectively. According to an embodiment, said wheel fixation element is associated with a spring element defining a suspensing for the driven wheel.

Furthermore, according to an embodiment, the driven wheel comprises an integrated electric motor.

The chair comprises a switching unit which is positioned on the chair so as to be accessible to said user.

Furthermore, according to an embodiment, the non-driven wheels are positioned in a square or rectangular pattern.

According to an embodiment, each non-driven wheel is of the caster wheel type and is configured to be freely and independently rotatable about a generally vertical axis, so as to allow a movement of said chair along a horizontal plane on which it is situated. According to an embodiment, the support arangement is arranged on the underside of said seat.

The present disclosure also provides a method for operating a personal movable chair along a surface by manual force from a user of said chair, wherein said chair comprises a frame with a seat for said user and a plurality of non-driven wheels. In particular, the method comprises the following steps: supporting a driven wheel, by means of a support arrangement; allowing lifting and lowering, respectively, of said driven wheel in relation to said surface; and controlling said driven wheel between a first position in which it is in contact with said surface and a second position in which it is raised from said surface.

Further advantages and advantageous features of the embodiments contemplated herein are disclosed in the following description and in the dependent claims.

In the following, the term "medical working chair", or in short "working chair", and also sometimes referred to as an "ergonomic polyfunctional chair" (according to ISO 9999) or "ergonomic assistive chair", is used to define a personal movable chair which is intended to be used by persons who may use their own manual forces in the legs and feet to move the chair in a given direction. More precisely, the personal movable chair according to this disclosure is primarily intended to be displaced in any desired direction as a result of the person sitting in the chair positioning his or her feet on the surface on which the chair stands and pushing or pressing the feet towards the surface so that the chair moves in the desired direction. Consequently, it is by using a force with the feet acting upon the surface that the user may move the chair. This is in contrast to a conventional wheelchair, which normally comprises two relatively large rear wheels which the user sitting in the wheelchair holds with the hands and forces to rotate, thereby moving the wheelchair either forwards or backwards. This means that, as opposed to conventional wheelchairs, a working chair is configured so as to be able to be displaced in generally any direction along the surface on which it stands.

### BRIEF DESCRIPTION OF THE FIGURES

The disclosure will be described in greater detail below with reference to the figures shown in the appended drawings.
- Figure 1: shows a perspective view of a personal movable chair according to the disclosure;
- Figure 2: shows a perspective view of a support arrangement to be used with the chair according to Figure 1;
- Figure 3: shows the support arrangement according to Figure 2, in an exploded view;
- Figure 4: shows a view of the chair as regarded from underneath the seat of the chair;
- Figure 5: shows a separate view of an actuator which forms part of the support arrangement;
- Figure 6: is a side view showing the support arrangement, in a first position;
- Figure 7: is a side view showing the support arrangement, in a second position;
- Figure 8: is simplified schedule of a control unit and electrically controlled element which can be used with the personal movable chair; and
- Figure 9: is a simplified flow chart of a method for operating the above-mentioned chair.

### DETAILED DESCRIPTION OF PARTICULAR EMBODIMENTS

Different aspects of the present disclosure will be described more fully hereinafter with reference to the enclosed drawings. The disclosure can be realized in many different forms and should not be construed as being limited to the embodiments below.

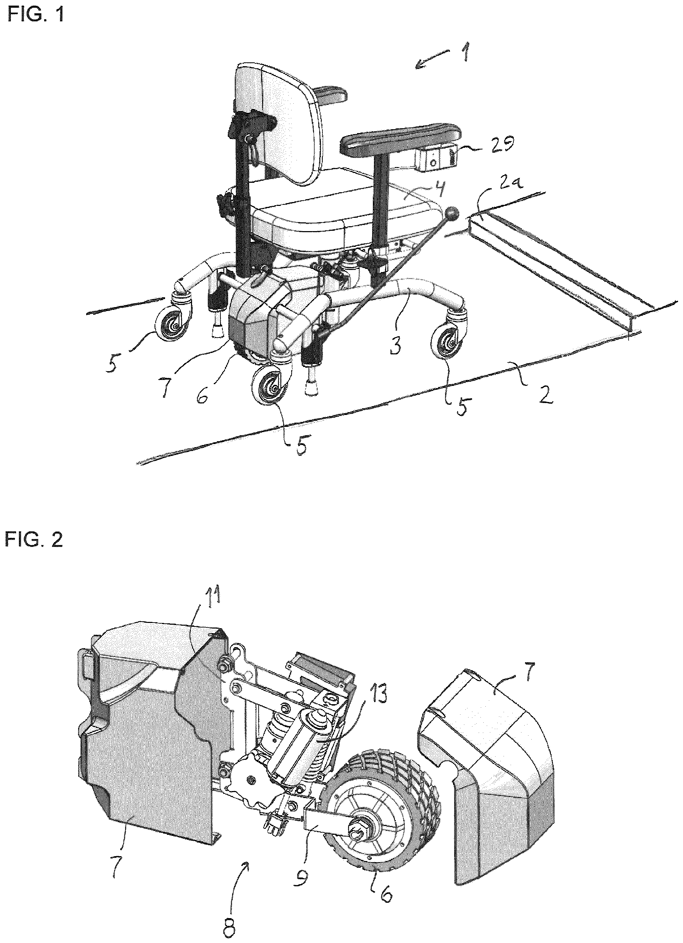

With initial reference to Figure 1, there is shown a personal movable chair 1 which is intended to be used by a user (not shown) and to be moved along a support surface 2, for example a conventional floor, on which the chair 1 stands. In accordance with known technology, the chair 1 is generally based on a frame 3, normally of steel or aluminium, and a seat 4 for the user. The chair 1 can also be provided with a backrest, armrests and other features which allow the user to be comfortably seated. According to an embodiment, the seat 4 can be raised and lowered, and the seat 4 is also preferably configured so as to be tilted, i.e. defining a given angle in relation to a horizontal plane, in order to enable a user in the chair 1 to move it in a suitable manner.

More precisely, a user who is sitting in the chair 1 may use the manual force in his or her legs and feet in order to push on the support surface 2 so as to move the chair 1 in a suitable direction on the surface 2. The chair 1 is normally relatively easy to move along the surface 2 for a user having normal muscle strength. To this end, the chair 1 is provided with a suitable number of non-driven wheels 5. The term "non-driven" refers to the fact that neither one of the wheels 5 is intended to be operated by any motor. According to the embodiment shown in Figure 1, the non-driven wheels 5 are constituted by caster wheels (also known as castor wheels, or swivel wheels). Each one of the wheels 5 is freely and independently rotatable in relation to a fastening point in the frame 3, due to the fact each wheel 5 comprises a swivel arrangement (not shown in detail) which allows the wheel 5 in question to rotate about a vertical axis. All the wheels 5 are preferably of the same dimensions.

According to an embodiment, the chair 1 comprises four non-driven wheels 5 which are positioned so a to define a pattern which is formed as a square or a rectangle. According to further embodiments, there may be provided a different number of non-driven wheels, for example three or five wheels.

Generally, the user may move the chair 1 in any desired direction, for example forwards, backwards and also sideways, along a horizontal plane which is defined by the surface 2. In comparison, a conventional wheel chair normally has two front wheels and two rear wheels arranged along fixed axes. Consequently, the wheels are not independently rotatable in the same manner as the above-mentioned caster wheels. For this reason, such a conventional wheel chair can only be moved forward and backward, i.e. not sideways.

In some cases, the user needs to move the chair 1 towards and over an obstacle, such as for example a threshold or an edge of a thick carpet. Such a situation is shown in Figure 1, which indicates a threshold 2a which forms part of the surface 2. In such a case, the user may have difficulty in passing such a threshold 2a since it will form an obstacle of a certain height for the chair 1.

In order to solve the situation described above, and to allow the user to move the chair 1 past the threshold 2a, the chair 1 according to this disclosure comprises an additional, driven wheel 6 which preferably is positioned underneath the seat 4. An arrangement involving the driven wheel 6 will now be described with reference to a first embodiment.

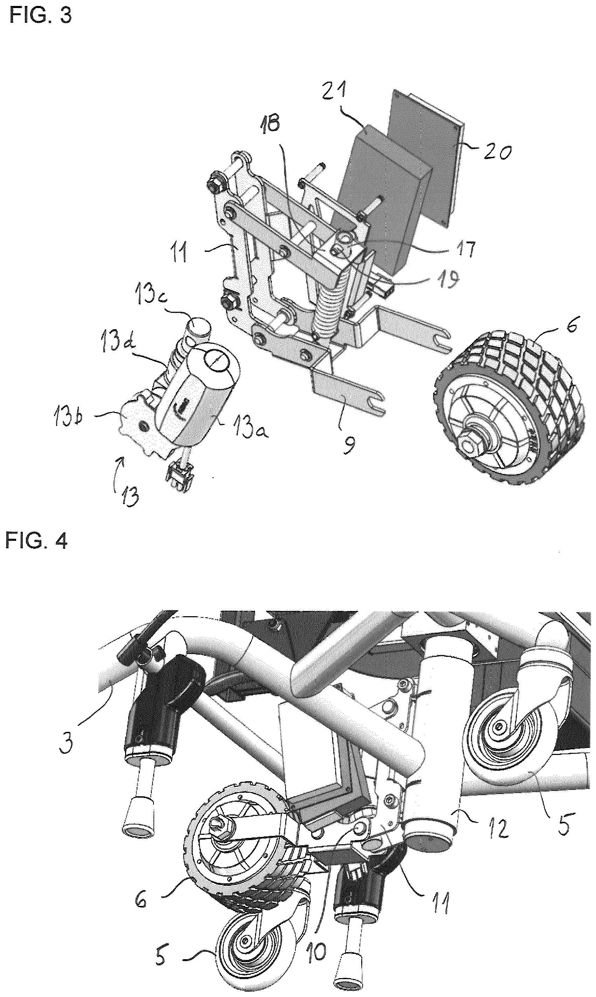

Figure 1 shows the driven wheel 6 partly covered by a hood 7. With further reference to Figure 2, which is a perspective view of a support arrangement 8 for the driven wheel 6 with the cover 7 (shown as two separate components) partly removed, and Figure 3, which shows the support arrangement 8 in an exploded view, it can be noted that the driven wheel 6 is rotatably arranged in a wheel fixation element 9 which forms part of the support arrangement 8. Also, the wheel fixation element 9 is pivotally arranged about a first rotational axis 10 (see Figure 3) being defined by the wheel fixation element 9 and a mounting element 11, which are consequently pivotable in relation to each other.

With further reference to Figure 4, which shows a perspective view as seen from of the underside of the chair 1, it is apparent that the mounting element 11 is fixed to a post 12 which extends from the underside of the seat 4 and downwards. Preferably, the post 12 forms part of the frame 3 and is positioned in a centered position in relation to the seat 4. Also, the post 12 may suitably serve as a fastening element for the frame 3 on which the non-driven wheels 5 are attached.

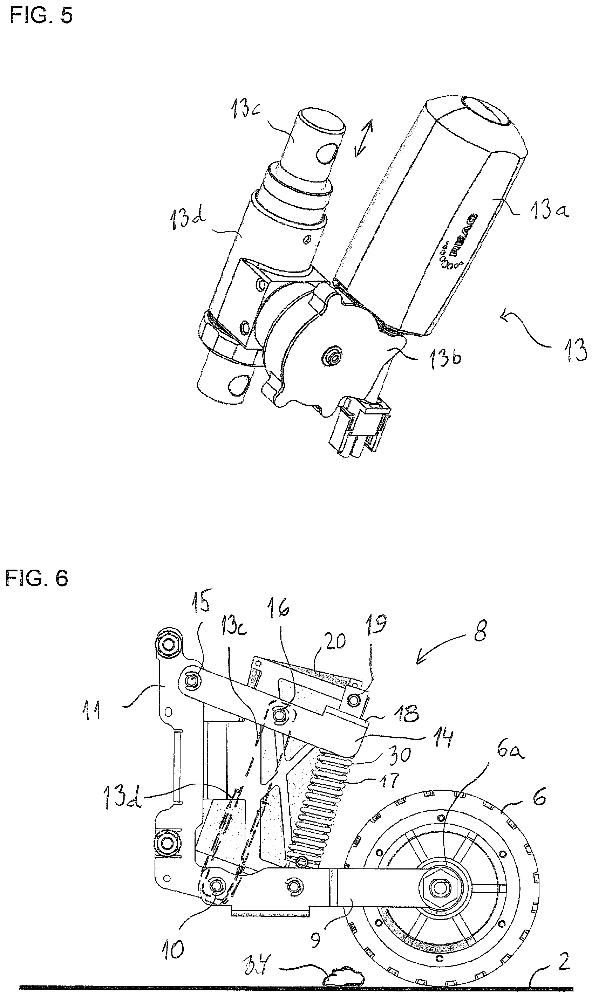

Referring back to Figure 2 and Figure 3, it should be noted that the support arrangement 8 comprises an actuator 13 which is configured for raising the driven wheel 6 to a position in which it is not in contact with the support surface 2, alternatively lowering the driven wheel 6 so as to be in contact with the support surface 2. Consequently, the driven wheel 6 can be in a first, raised condition or a second, non-raised condition. The intention with the second position is that the driven wheel 6 can be operated by means of a motor so as to assist the user to move the chair 1. This will be described below. The actuator 13 comprises a motor 13a, a gearhub 13b and a piston 13c. For clarity, the actuator 13 is also shown separately in Figure 5. In a manner which is known as such, the motor 13a can be actuated so as to exert a force upon the gearhub 13b, which in turn is configured so as force the piston 13c to be extended or withdrawn in relation to a sleeve 13d, as indicated by means of an arrow in Figure 5.

The operation of the actuator 13 will now be described with reference to Figure 6, which shows a side view of the support arrangement 8 in a condition in which the driven wheel 6 rests against the support surface 2. For clarity, the piston 13c and sleeve 13d of the actuator 13 are shown schematically with broken lines. The lower part of the sleeve 13d is fastened in the above-mentioned first rotational axis 10, whereas an upper part of the piston 13c is fastened in a lifting arm 14 which is pivotally arranged in a second rotational axis 15 and connected to the mounting element 11.

In the condition of the support arrangement 8 which is shown in Figure 6, the driven wheel 6 rests against the support surface 2 and can be used to force the chair 1 to move in a particular direction, as controlled by the user of the chair 1. To this end, the driven wheel 6 is suitable configured with a rubber tyre and is provided with an electric motor 6a which is mounted in an integrated manner and is fully enclosed within the hub of the driven wheel 6. The operation of the electric motor 6a can be controlled by the user of the chair 1 by operating a switch unit 29 (see Figure 1) having a suitable manually operated switch which can be easily reached by the user. This operation of the electric motor 6a will be described in greater detail below.

With reference in particular to to Figure 4 and Figure 6, one end of the wheel fixation element 9 is pivotally mounted to a lower part of the mounting element 11 via the first rotational axis 10, whereas the other end of the wheel fixation element 9 extends to the hub of the wheel 6. Also, one end of the the lifting arm 14 is pivotally arranged in an upper part of the mounting element 11 via the second rotational axis 15, whereas the other end of the lifting arm comprises a plate 18. The mounting element 11 is attached along the extension of the post 12 underneath the seat 4, suitably but not necessarily along a generally vertical direction.

According to alternative embodiments, the driven wheel 6 can be operated by means of other types of motors, including motors which are not integrated within the hub of the driven wheel. As an example, it should be noted that a known type of DC motor having a transmission and gear arrangement can be used to operate the driven wheel 6.

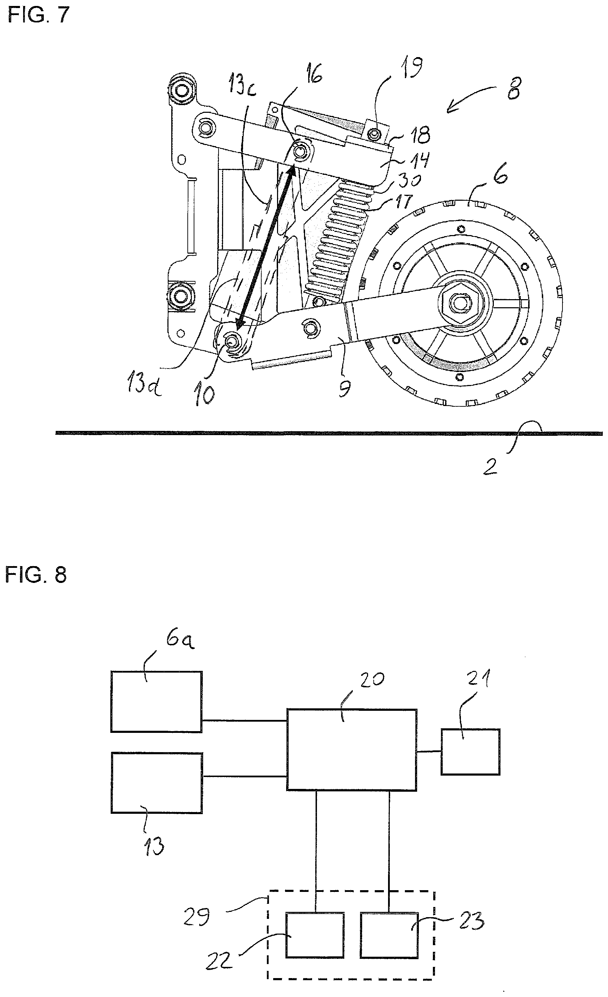

Furthermore, the switch unit 29 is also configured so as to allow the user to operate the actuator 13 shown in Figure 6 in a manner so that the piston 13c is extended with reference to the sleeve 13d. This is carried out when the user wishes to move the driven wheel 6 between its raised and lowered positions. This means that the piston 13c acts with a force between the first rotational axis 10 and an upper fastening point 16 for the piston 13c, as shown by means of an arrow in Figure 7. As a result, the wheel fixation element 9 will be rotated around the first rotational axis 10 in a manner which causes the driven wheel 6 to be raised, and is consequently no longer in contact with the surface 2. According to an embodiment, the driven wheel 6 can be raised approximately 25 mm above the support surface 2. In this condition, the driven wheel 6 can obviously not be used to propel the chair 1 along the support surface 2.

In summary, the disclosure relates to a personal movable chair 1 which can be operated to move along a surface 2 by means of a manual force by a user who is sitting in the chair 1. The chair 1 comprises a frame 3 with a seat 4, and also a plurality of non-driven wheels 5. Furthermore, the chair 1 comprises a driven wheel 6 and a support arrangement 8 for said driven wheel 6. The support arangement 8 is arranged on the underside of the seat 4 and comprises an actuator 8 which is configured for lifting and lowering, upon actuation, the driven wheel 6 between a first position in which it is in contact with the surface 2 and a second position in which it is raised from the surface 2.

As shown in the drawings, the driven wheel 6 is positioned generally centrally under the seat 4. More precisely, the driven wheel 6 is supported by the support arrangement 8 which is mounted on a support post 12 which extends downwardly from the underside of the seat 4.

Furthermore, and with reference to Figure 6, it should be noted that the support arrangement 8 is provided with a spring 30, preferably a compressible helix spring, which is arranged around a spring post 17 (see also Figure 3 and Figure 6). If the driven wheel 6 should roll into an object 34 on the surface 2, the wheel 6 and consequently also the wheel fixation element 9 will move upwards (i.e. towards the lifting arm 14) and against the force from the spring 30. This means that the driven wheel 8 may roll over the object 34 and then spring back towards the surface 2 in such a situation.

Also, with reference to Figure 3 and Figure 7, the lifting arm 14 is provided with a plate 18 which is raised when the lifting arm 14 is raised. This may occur when the support arrangement 8 is controlled so as to assume the condition in which the driven wheel 6 is in its raised position, as shown in Figure 7. The plate 18 defines, together with a stop post 19 in the top part of the spring post 17, the maximum raised position of the lifting arm 14 and consequently also of the driven wheel 6.

According to an embodiment and as shown for example in Figure 6 and Figure 7, the wheel 6 can be operated in a lowered position (Figure 6) and a raised position (Figure 7). When the wheel 6 is operated so as to be raised, the actuator 13 is actuated so that its piston 13c is extended, which increases the distance between the position of the rotational axis 10 and the upper fastening point 16. This corresponds to a pivoting movement of the lifting arm 14 in a counterclockwise direction as can be seen by comparing Figure 6 and Figure 7. When the lifting arm 14 has been pivoted to a suitable degree (being determined for example by the desired height of the wheel 6 in the raised position) it will reach the stop post 19 (see Figure 7). The stop post 19 is situated in an upper end of the spring post 17 and consequently the wheel fixation element 9 will then be pivoted in a counterclockwise direction as seen by comparing the views in Figure 6 and Figure 7. In this manner, the wheel 6 will be raised, as shown in Figure 7.

Figure 8 is a simplified schedule of a control unit 20 and certain further electrical element to which it is connected. Initially, it should be mentioned that the control unit 20 is suitably mounted on the support arrangement 8, as shown clearly in Figure 3. The control unit 20 is associated with a battery unit 21. Furthermore, the control unit 20 is connected to the motor 6a located within the hub of the driven wheel 6, and is also connected to the actuator 13.

Furthermore, the control unit 20 is connected to the above-mentioned switching unit 29 which is intended to be operated by the user. The switching unit 29 preferably comprises a first switch 22 for lowering the driven wheel 6 and a second switch 23 for raising the driven wheel 6. Also, although not shown in detail in Figure 8, it should be noted that the battery unit 21 supplies the shown components with electric power.

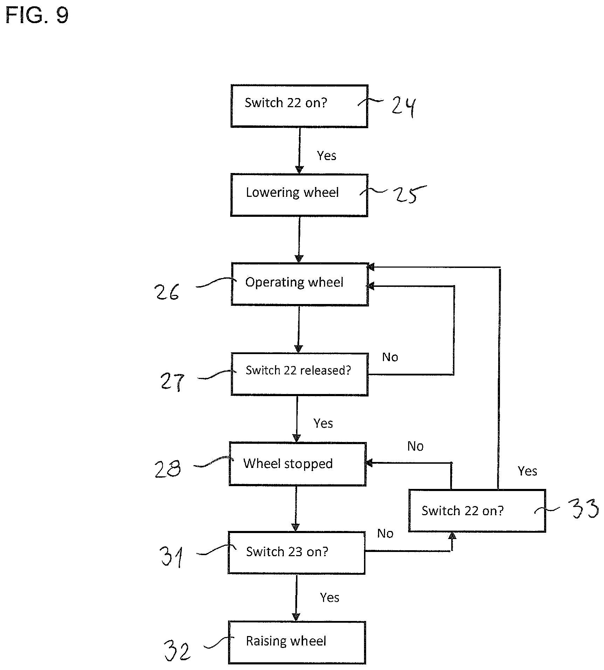

Furthermore, Figure 9 is a simplified flow chart for a method for operating the above-mentioned chair 1. It is assumed that the initial condition when considering the flow chart is that the driven wheel 6 is in its raised position, i.e. a condition in which it is not used for propulsion of the chair 1. If the user actuates the first switch 22 on the switching unit 29 (see Figure 1), as indicated by means of reference numeral 24 in Figure 9, the actuator 13 is actuated for lowering the driven wheel 6 to a position in which it is in contact with the surface 2. This is indicated by means of reference numeral 25 in Figure 9. When the driven wheel 6 is in a correct lowered position, the driven wheel 6 is actuated by means of the motor 6b, see reference numeral 26. The wheel 6 is actuated as long as the first switch 22 is pressed. If the first switch 22 is released (reference numeral 27), the wheel 6 is no longer operated but remains in its lowered position (reference numeral 28).

Furthermore, the control unit 20 is configured for detecting whether the second switch 23 is actuated by the user, see reference numeral 31. If this is the case, the actuator 13 is actuated in a manner so as to raise the driven wheel 6 to its raised position (reference numeral 32). In the event that the first switch 22 is instead pressed again (reference numeral 33), the wheel 6 is operated so as to assist the movement of the chair 1 again (reference numeral 26).

In summary, the disclosure relates to a method for operating the chair 1 along the surface 2 by manual force from a user, in particular in accordance with the following steps:
i) the driven wheel 6 is supported by the support arrangement 8, preferably on the underside of the seat 4;
ii) the driven wheel 6 is operated so as to be lifted and lowered, respectively, in relation to the support surface 2; and
iii) the driven wheel 6 is controlled between a first position in which it is in contact with said surface 2 and a second position in which it is raised from said surface 2.

According to the embodiment described above, the driven wheel 6 is operated only in the forwards direction. According to a further embodiment, the driven wheel can be configured so as to be operated in both the forwards and backwards direction. Such an embodiment requires suitable modifications of the switching unit 29 and the control unit 20.

According to the embodiment described above, the switching unit 29 is configured and positioned on the chair 1 so as to be accessible and controlled by a user in the chair 1. According to a further embodiment, it may comprise a switching unit which is positioned for example on a handle (not shown in the drawings) arranged on the rear side of the backrest and which is configured for being accessed by a caretaker who is pushing the chair 1.

According to the embodiment described above, the driven wheel 6 can be controlled to its raised and lowered position in a mechanical manner through the use of the piston 13c and the plate 18 operating together with the stop post 19. According to additional embodiments which are not shown, the support arrangement can be provided with sensor devices in order to detect when the driven wheel 6 has reached its first and second positions.

According to further embodiments, the driven wheel 6 can be operated between its first and second positions by means of a manual arrangement, which may comprise a manually actuated lever which can be operated by the user so as to raise and lower the driven wheel.

According to the embodiment shown above, the mounting element 11 is fastened in a fixed manner to the post 12. According to a further embodiment, the mounting element 11 can be fastened to the post 12 in a manner so that it can be rotated in relation to the post 12, i.e. around the same vertical axis of rotation as the post 12. Such an arrangement may simplify the movement of the chair 1 when a user of the chair 1 intends to move the chair 1 sideways and the driven wheel 6 is in its lowered position.

The invention is not limited to the embodiments described above but can be varied within the scope of the appended claims.

## Claims

1. A personal movable working chair (1) configured to be operated along any direction of a surface (2) by manual force in the legs and feet acting on said surface by a user sitting in said chair (1), wherein said chair (1) comprises a frame (3) with a seat (4) for said user and a plurality of non-driven wheels (5) which are all freely and independently rotatable about a vertical axis; said chair (1) having a driven wheel (6) which is configured for assisting said user to move the chair (1), and a support arrangement (8) for said driven wheel (6), **characterized in that** said support arrangement (8) comprises an actuator (13) which is configured for lifting and lowering, upon actuation, said driven wheel (6) in relation to said surface (2), between a first position in which it is in contact with said surface (2) and a second position in which it is raised from said surface (2), and wherein the chair (1) also comprises a manually operated switching unit (29) which is accessible to the user and which is configured for moving the driven wheel (6) between its raised and lowered positions by the user and for actuating the driven wheel (6) when it is positioned in the lowered position.

2. A chair (1) according to claim 1, wherein said driven wheel (6) is positioned generally centrally under said seat (3).

3. A chair (1) according to claim 1 or 2, wherein the support arrangement (8) is mounted on a support post (12) which extends downwardly from the underside of said seat (3).

4. A chair (1) according to any one of the preceding claims, wherein the support arrangement (8) supports the actuator (13) which is configured for raising and lowering said driven wheel (6) between said first and second positions, respectively.

5. A chair (1) according to claim 4, wherein the support arrangement (8) comprises a pivotable wheel fixation element (9) which is configured so as to be pivoted, upon actuation, so as to displace the driven wheel (6) between said first and second positions, respectively.

6. A chair (1) according to claim 5, wherein said wheel fixation element (9) is associated with a spring element (30, 17) defining a suspensing for the driven wheel (6).

7. A chair (1) according to any one of the preceding claims, wherein the driven wheel (6) comprises an integrated electric motor (6a).

8. A chair (1) according to any one of the preceding claims, wherein the non-driven wheels (5) are positioned in a square or rectangular pattern.

9. A chair (1) according to any one of the preceding claims, wherein each non-driven wheel (5) is of the caster wheel type.

10. A chair (1) according to any one of the preceding claims, wherein said support arrangement (8) is arranged on the underside of said seat (4).

11. A method for operating a personal movable working chair (1) along any direction of a surface (2) by manual force in the legs and feet acting on said surface by a user sitting in said chair (1), wherein said chair (1) comprises a frame (3) with a seat (4) for said user and a plurality of non-driven wheels (5) which are all freely and independently rotatable about a vertical axis; **characterized in that** said method comprises the following steps:
- supporting a driven wheel (6), which is configured for assisting said user to move the chair (1), by means of a support arrangement (8);
- allowing lifting and lowering, respectively, of said driven wheel (6) in relation to said surface (2) by providing operation of an actuator (13) for lifting and lowering, respectively, of said driven wheel (6);
- controlling said driven wheel (6) between a first position in which it is in contact with said surface (2) and a second position in which it is raised from said surface (2); and
- allowing operation by the user of a manually operated switching unit (29) in the chair (1) which is accessible to the user, and which is configured for moving the driven wheel (6) between its raised and lowered positions by the user and for actuating the driven wheel (6) when it is positioned in said lowered position.

12. A method according to claim 11, wherein said method comprises:
- allowing actuation of a switching unit (29) which is accessible in the chair (1);
- operating said actuator (13) and a motor (6b) forming part of the driven wheel (6) upon actuation of said switching unit (29).

## Patentansprüche

1. Persönlicher bewegbarer Arbeitsstuhl (1), der konfiguriert ist, um entlang einer beliebigen Richtung einer Oberfläche (2) durch eine manuelle Kraft in den Beinen und Füßen, die auf die Oberfläche wirkt, durch einen Benutzer bedient zu werden, der in dem Stuhl (1) sitzt, wobei der Stuhl (1) einen Rahmen (3) mit einem Sitz (4) für den Benutzer und eine Vielzahl nicht angetriebener Räder (5) umfasst, die alle frei und unabhängig voneinander um eine vertikale Achse drehbar sind; wobei der Stuhl (1) ein angetriebenes Rad (6), das zum Unterstützen des Benutzers konfiguriert ist, um den Stuhl (1) zu bewegen, und eine Trägeranordnung (8) für das angetriebene Rad (6) aufweist,
**dadurch gekennzeichnet, dass** die Trägeranordnung (8) einen Aktuator (13) umfasst, der zum Anheben und Senken, bei Betätigung, des angetriebenen Rads (6) in Bezug auf die Oberfläche (2) zwischen einer ersten Position, in der es mit der Oberfläche (2) in Kontakt ist, und einer zweiten Position konfiguriert ist, in der es von der Oberfläche (2) angehoben ist, und wobei der Stuhl (1) ferner eine manuell bediente Schalteinheit (29) umfasst, die für den Benutzer zugänglich ist und die zum Bewegen des angetriebenen Rads (6) zwischen seiner angehobenen und gesenkten Position durch den Benutzer und zum Betätigen des angetriebenen Rads (6) konfiguriert ist, wenn es in der gesenkten Position positioniert ist.

2. Stuhl (1) nach Anspruch 1, wobei das angetriebene Rad (6) im Wesentlichen mittig unter dem Sitz (3) positioniert ist.

3. Stuhl (1) nach Anspruch 1 oder 2, wobei die Trägeranordnung (8) auf einem Trägerpfosten (12) montiert ist, der sich von der Unterseite des Sitzes (3) nach unten erstreckt.

4. Stuhl (1) nach einem der vorstehenden Ansprüche, wobei die Trägeranordnung (8) den Aktuator (13) trägt, der zum Anheben und Senken des angetriebenen Rads (6) zwischen der ersten beziehungsweise der zweiten Position konfiguriert ist.

5. Stuhl (1) nach Anspruch 4, wobei die Trägeranordnung (8) ein schwenkbares Radbefestigungselement (9) umfasst, das so konfiguriert ist, dass es bei Betätigung geschwenkt wird, um das angetriebene Rad (6) zwischen der ersten beziehungsweise der zweiten Position zu verschieben.

6. Stuhl (1) nach Anspruch 5, wobei das Radbefestigungselement (9) mit einem Federelement (30, 17) verknüpft ist, das eine Aufhängung für das angetriebene Rad (6) definiert.

7. Stuhl (1) nach einem der vorstehenden Ansprüche, wobei das angetriebene Rad (6) einen integrierten Elektromotor (6a) umfasst.

8. Stuhl (1) nach einem der vorstehenden Ansprüche, wobei die nicht angetriebenen Räder (5) in einem quadratischen oder rechteckigen Muster positioniert sind.

9. Stuhl (1) nach einem der vorstehenden Ansprüche, wobei jedes nicht angetriebene Rad (5) von der Laufrollenart ist.

10. Stuhl (1) nach einem der vorstehenden Ansprüche, wobei die Trägeranordnung (8) an der Unterseite des Sitzes (4) angeordnet ist.

11. Verfahren zum Bedienen eines persönlichen bewegbaren Arbeitsstuhls (1) entlang einer beliebigen Richtung einer Oberfläche (2) durch die manuelle Kraft in den Beinen und Füßen, die auf die Oberfläche wirkt, durch einen Benutzer, der in dem Stuhl (1) sitzt, wobei der Stuhl (1) einen Rahmen (3) mit einem Sitz (4) für den Benutzer und eine Vielzahl nicht angetriebener Räder (5) umfasst, die alle frei und unabhängig voneinander um eine vertikale Achse drehbar sind;
**dadurch gekennzeichnet, dass** das Verfahren die folgenden Schritte umfasst:
- Tragen eines angetriebenen Rads (6), das zum Unterstützen des Benutzers konfiguriert ist, um den Stuhl (1) zu bewegen, mittels einer Trägeranordnung (8);
- Ermöglichen des Anhebens beziehungsweise des Senkens des angetriebenen Rads (6) in Bezug auf die Oberfläche (2) durch Bereitstellen einer Bedienung eines Aktuators (13) zum Anheben beziehungsweise Senken des angetriebenen Rads (6);
- Steuern des angetriebenen Rads (6) zwischen einer ersten Position, in der es mit der Oberfläche (2) in Kontakt ist, und einer zweiten Position, in der es von der Oberfläche (2) angehoben ist; und
- Ermöglichen der Bedienung durch den Benutzer einer manuell bedienten Schalteinheit (29) in dem Stuhl (1), der für den Benutzer zugänglich ist und der zum Bewegen des angetriebenen Rads (6) zwischen seiner angehobenen und gesenkten Position durch den Benutzer und zum Betätigen des angetriebenen Rads (6) konfiguriert ist, wenn es in der gesenkten Position positioniert ist.

12. Verfahren nach Anspruch 11, wobei das Verfahren umfasst:
- Ermöglichen der Betätigung einer Schalteinheit (29), die in dem Stuhl (1) zugänglich ist;
- Bedienen des Aktuators (13) und eines Motors (6b), der Teil des angetriebenen Rads (6) ist, bei Betätigung der Schalteinheit (29).

## Revendications

1. Fauteuil de travail mobile personnel (1) conçu pour fonctionner le long de l'une quelconque direction d'une surface (2) par la force manuelle des jambes et des pieds agissant sur ladite surface par un utilisateur assis sur ledit fauteuil (1), dans lequel ledit fauteuil (1) comprend un cadre (3) avec un siège (4) pour ledit utilisateur et une pluralité de roues non entraînées (5) qui sont toutes librement et indépendamment rotatives autour d'un axe vertical ; ledit fauteuil (1) ayant une roue entraînée (6) qui est conçue pour aider ledit utilisateur à déplacer le fauteuil (1), et un agencement de support (8) pour ladite roue entraînée (6), **caractérisé en ce que** ledit agencement de support (8) comprend un actionneur (13) qui est conçu pour lever et abaisser, lors de l'actionnement, ladite roue entraînée (6) par rapport à ladite surface (2), entre une première position où elle est en contact avec ladite surface (2) et une seconde position où elle est relevée de ladite surface (2), et dans lequel le fauteuil (1) comprend également une unité de commutation à fonctionnement manuel (29) qui est accessible à l'utilisateur et qui est conçue pour déplacer la roue entraînée (6) entre ses positions relevée et abaissée par l'utilisateur et pour actionner la roue entraînée (6) lorsqu'elle est positionnée en position abaissée.

2. Fauteuil (1) selon la revendication 1, dans lequel ladite roue entraînée (6) est positionnée généralement au centre sous ledit siège (3).

3. Fauteuil (1) selon la revendication 1 ou 2, dans lequel l'agencement de support (8) est monté sur un montant de support (12) qui s'étend vers le bas à partir de la face inférieure dudit siège (3).

4. Fauteuil (1) selon l'une quelconque des revendications précédentes, dans lequel l'agencement de support (8) supporte l'actionneur (13) qui est conçu pour relever et abaisser ladite roue entraînée (6) entre lesdites première et seconde positions, respectivement.

5. Fauteuil (1) selon la revendication 4, dans lequel l'agencement de support (8) comprend un élément de fixation de roue pivotant (9) qui est conçu de façon à pivoter, lors de l'actionnement, de façon à décaler la roue entraînée (6) entre lesdites première et seconde positions, respectivement.

6. Fauteuil (1) selon la revendication 5, dans lequel ledit élément de fixation de roue (9) est associé à un élément de ressort (30, 17) définissant une suspension pour la roue entraînée (6).

7. Fauteuil (1) selon l'une quelconque des revendications précédentes, dans lequel la roue entraînée (6) comprend un moteur électrique intégré (6a).

8. Fauteuil (1) selon l'une quelconque des revendications précédentes, dans lequel les roues non entraînées (5) sont positionnées selon un motif carré ou rectangulaire.

9. Fauteuil (1) selon l'une quelconque des revendications précédentes, dans lequel chaque roue non entraînée (5) est du type roue orientable.

10. Fauteuil (1) selon l'une quelconque des revendications précédentes, dans lequel ledit agencement de support (8) est agencé sur la face inférieure dudit siège (4).

11. Procédé pour faire fonctionner un fauteuil de travail mobile personnel (1) le long de l'une quelconque direction d'une surface (2) par la force manuelle des jambes et des pieds agissant sur ladite surface par un utilisateur assis sur ledit fauteuil (1), dans lequel ledit fauteuil (1) comprend un cadre (3) avec un siège (4) pour ledit utilisateur et une pluralité de roues non entraînées (5) qui sont toutes librement et indépendamment rotatives autour d'un axe vertical ;
**caractérisé en ce que** ledit procédé comprend les étapes suivantes :
- supporter une roue entraînée (6), qui est conçue pour aider ledit utilisateur à déplacer le fauteuil (1), au moyen d'un agencement de support (8) ;
- permettre le levage et l'abaissement, respectivement, de ladite roue entraînée (6) par rapport à ladite surface (2) en réalisant le fonctionnement d'un actionneur (13) pour le levage et l'abaissement, respectivement, de ladite roue entraînée (6) ;
- commander ladite roue entraînée (6) entre une première position où elle est en contact avec ladite surface (2) et une seconde position où elle est relevée de ladite surface (2) ; et
- permettre à l'utilisateur de faire fonctionner une unité de commutation à fonctionnement manuel (29) dans le fauteuil (1) qui est accessible à l'utilisateur, et qui est conçue pour déplacer la roue entraînée (6) entre ses positions relevée et abaissée par l'utilisateur et pour actionner la roue entraînée (6) lorsqu'elle est positionnée dans ladite position abaissée.

12. Procédé selon la revendication 11, dans lequel ledit procédé comprend :
- le fait de permettre l'actionnement d'une unité de commutation (29) qui est accessible dans le fauteuil (1) ;
- le fait de faire fonctionner ledit actionneur (13) et un moteur (6b) faisant partie de la roue entraînée (6) lors de l'actionnement de ladite unité de commutation (29).
